# EUROPEAN PATENT APPLICATION

(11) **EP 2 282 132 A2**
(43) Date of publication of application: **09.02.2011**
(21) Application number: 10185882.7
(22) Date of filing: 17.06.2005
(51) Int. Cl.: F24D 17/00, E03C 1/04, C02F 1/32, E03B 7/07

(54) **Vase comprising means for clearing water from micro organism, method for clearing water from micro organism in a vase.**

(30) Priority: 18.06.2004 EP 04076803
(62) Divisional of application: 05752862.2
(71) Applicant: Ultra Violet Star Holding B.V., 1601 MH Enkhuizen (NL)
(72) Inventor: Ter Stege, Stephan, 6770 Nordfjordeid (NO)
(74) Representative: Jansen, Cornelis Marinus

(57) **Abstract**

Vase comprising an apparatus for clearing water from micro-organisms. The vase comprises: an inlet opening (212); an outlet opening (215); pumping means (229) for pumping water around, between said inlet and outlet opening (212;215), along a radiation assembly (206) and/or a filtering assembly (204). The vase comprises furthermore control means (208) for controlling, for example, the pump rate of the pumping means (229) and for monitoring the lifetime or malfunction of the components, thereby enhancing the system's safety, and helping to prolong the lifetime and/or blooming quality of flowers contained in the vase.

## Description

The invention relates to a method for clearing water from micro-organisms. In this description the term 'clearing' is meant to include removing, killing or otherwise inactivating said micro-organisms.

Most water supply systems contain micro-organisms, such as for example Legionella. These micro-organisms especially thrive near supply openings where water leaves the system, such as shower heads, sprinklers, fountains, or the like. Those micro-organisms may be spread as water is being discharged from said openings, thereby posing a serious health threat to users being exposed thereto. Various methods have already been proposed to eliminate or at least inactivate such micro-organisms before leaving the supply system.

WO 00/78366 (Van Remmen) discloses a method wherein a supply opening of a water supply system, in particular a shower head, is provided with an UV(Ultraviolet)-light source, which is arranged to radiate the water as it leaves the shower head. The UV-light inactivates micro-organisms contained in the water and prevents new micro-organisms to grow around the supply opening. A disadvantage of this known method is that, in order to function properly, the UV-source should be of relative high power, i.e. capable of emitting radiation with sufficient intensity to eliminate relatively large-sized micro-organisms, such as amoebas, which may contain smaller bacteria, such as Legionella Pneumophila and/or large concentrations of such micro-organisms, which may for instance arise when agglomerates of micro-organisms, grown elsewhere in the system, are trailed along by the passing water. However, such high power radiation sources will generally not be allowed, due to the potential dangers involved when applying electricity in wet environments. Consequently, amoebas, upon passing the radiation source, will at most get damaged, thereby releasing the smaller bacteria contained therein. The remaining exposure time will in most instances be too short to effectively inactivate said released bacteria, resulting in potentially unsafe situations.

It is an object of the invention to provide a method for clearing water of micro-organisms, wherein the disadvantage of the known method is avoided while maintaining the advantage thereof. To this end a method for clearing water in a water supply system from micro-organisms, such as Legionella, according to the invention is **characterised in that** the method comprises the steps of filtering the water and subsequently radiating the filtered water to inactivate micro-organisms that may still remain therein, said radiating step acting on the water at least as this water leaves the water supply system through a supply opening.

By filtering the water, a substantial portion of the micro-organisms, especially the larger ones, can be removed from the water. Consequently, only a small concentration of relatively small micro-organisms that manage to pass the filtering step, will need to be inactivated during the subsequent radiating step. This may be accomplished with a radiation source of allowable, i.e. relative low intensity. By radiating the water as it passes the supply opening, micro-organisms are deprived from any opportunity to develop in the water before it exits the supply system and reaches a user. In this description the term supply opening is reserved for those discharge or outlet openings, via which water is released in such way that a user may become exposed to this water.

It is noted that US 5,891,329 (Massholder) discloses a shower head comprising a UV-source surrounded by a filter. Hence, when water passes said shower head, it will be simultaneously filtered and radiated. This known method suffers from a number of disadvantages. For one, both the filter material itself, as well as any sediment or other contamination that inevitably will accumulate therein during use, will limit the penetration depth of the UV-radiation and create shades, which prevents the micro-organisms from being radiated from all sides with a sufficient radiation dose. Moreover, the filter unpredictably affects the time needed for the micro-organisms to pass the filter and accordingly their exposure time to radiation. Consequently, each micro-organism may receive a different radiation dose; the dose cannot be accurately controlled.

In a method according to the invention, the filtering step preferably takes place just prior to the radiating step, so that micro-organisms that happen to pass the filtering step get no or little opportunity to multiply before being inactivated by the radiating step. This means that a filter assembly for performing the filtering step is preferably located directly upstream of a radiation assembly that performs the radiating step. Thus, the filtering step may be closely followed by the radiating step. However, for practical reasons, a short distance may be present between the filter and radiation assembly. Therefore, the term 'closely' is meant to encompass embodiments, wherein the radiating step begins at for instance less than 30 cm from the filtering step, preferably less than 20 cm.

Preferably, the radiating step makes use of Ultraviolet (UV) light in particular UV-C light, having a wavelength ranging from about 100 nanometre (nm) up to about 280 nm, wherein a wavelength of around 254 nm has turned out to be particularly effective to inactivate the micro-organisms.

According to one aspect of the invention, the radiation step can make use of at least two different radiation intensities so as to accomplish two different tasks. The radiation step may for instance involve a first radiation intensity for killing or deactivating micro-organisms in water flowing towards the supply opening and a second radiation intensity for radiating a supply opening, to prevent growth of micro-organism in or around said opening. Thanks to this feature, the respective intensities can be optimally adapted to the required radiation doses of the respective tasks. For instance, the radiation intensity for preventing growth of micro-organisms around the supply opening may be relatively low, since the exposure time of the opening will be long. On the other hand, the radiation intensity for killing micro-organisms in passing water may need to be relatively high to achieve a sufficient radiation dose, especially when the flow rate of the water is high.

In further elaboration, the water is preferably radiated with a radiation dose of at least 5,4 mW/cm² (milli-Watt per square centimetre), Such dose is sufficient to kill Legionella. In order to make the method suitable for inactivating other micro-organisms as well, such as E.coli, Salmonella, Giardia, Cryptosporidium, Shigella, dysenteria or Vibrio, the radiation dose can be increased, preferably to over 20 mW/cm², more preferably to 30 mW/cm² or more.

In a further preferred embodiment the filtering step makes use of antibacterial filter materials and/or filter means that have been treated with an antibacterial compound. This helps to slow down further growth of micro-organisms retained in said filter materials, thereby increasing the effectiveness of the filtering step. It goes without saying, that the filtering step may be arranged to filter the water from other contamination, such as sediment.

Furthermore, the filtering material, especially the pore size thereof, may be chosen such, that larger micro-organisms, in particular micro-organisms having a size of for example 5 µm (micron) or larger are retained and micro-organisms of smaller size are retained for a substantial part. Preferably, the filtering step is arranged to retain particles larger than 5 µm, preferably at least 99% of all particles larger than or equal to 3 µm and at least 90% of all particles having a size up to 3 µm.. By doing so, larger amoeba's which cannot be effectively inactivated by the radiation source, will be retained, whereas smaller micro-organisms, which can be inactivated by the radiation source, may be able to pass the filter, in concentrations sufficiently small for the radiation source to cope with. It will be clear that the mentioned filter values are not to be taken as absolute values, but rather should be chosen in combination with the other process parameters, such a the characteristics of the available radiation source, especially the intensity thereof and/or the flow rate of the water. For instance, if the available radiation source has a relative low intensity, the filter pore size should be reduced so as to retain all micro-organisms up to a size and concentration that can be effectively inactivated by the given radiation source. However, if such low intensity radiation source were to be combined with a relatively small water flow rate, this would permit the filtering step to be more coarse, because the small flow rate causes the exposure time to be longer and hence the received radiation dose to build up to a sufficient level, capable of inactivating larger micro-organisms, notwithstanding the low radiation intensity of the source.

In addition, the filtering step may take place in several consecutive steps, from coarse to fine, so as to prevent a relatively fine filter from becoming clogged prematurely. Also, additional filtering may be provided, to filter specific chemical components from the water, such as for instance chlorine. In an alternative embodiment, the water is re-circulated, so as to pass the filtering and/or radiating step more than once.

By re-circulating the water so as to pass the radiation step more than once, the exposure time of the micro-organisms is prolonged and consequently a relative high radiation dose can be built up with a radiation source of relative low intensity. Similar, a higher percentage of micro-organisms can be retained by having the water pass the filtering step several times. Such a method may especially be beneficial in water supply systems which condition water in confined spaces, such as an aquarium, a (swimming) pool, a humidifier, a vase or the like, of which exemplary embodiments will be discussed in more detail below.

In yet another preferred embodiment, the temperature of the water can be controlled prior to the filtering and/or radiating step.

. This may have a beneficial effect on both the filtering step and the radiation step, as both steps in general work best if the temperature is not too elevated. Moreover, such temperature control means may protect a user against being exposed to too hot water.

The invention furthermore relates to an apparatus for clearing water supplied by a water supply system, possibly according to a above described method, comprising a water inlet for connection to the water supply system at least one outlet opening for discharging cleared water, a radiation assembly, arranged to radiate the at least one outlet opening and any water in operation passing there through, and a filter assembly, located upstream of the radiation assembly and arranged to filter the water prior to it being radiated.

The radiation assembly may comprise a radiation source, surrounded by reflective walls, building a water passage along the radiation source.

According to one aspect of the invention, the radiation assembly may comprise a radiation source, such as an UV-lamp, and an optical conductor, arranged to conduct radiation emitted by said source to a supply opening at some distance from said source. This allows the voluminous radiation source and necessary power supply to be located at a suitable, safe location, away from the supply opening. The conductor can for instance comprise one or more optical fibres, which are flexible and can be readily routed around corners. Such conductor can moreover be of relatively slim dimensions allowing such conductor to be incorporated in a water hose or pipe, for instance a shower hose, leading to the supply opening, i.e. a shower head. The conductor can furthermore be designed to emit radiation over a relatively long section, so as to extend the exposure time of the water passing along said conductor, allowing the radiation intensity to be relatively low. The radiation assembly may be arranged to operate at a low voltage, preferably 12 Volt or less.

Preferably the apparatus is provided with a filter assembly comprising a filter housed in a replaceable casing, said casing being preferably provided with quick release means for easy connection to the apparatus.

This casing may facilitate replacement of the filter by preventing direct contact between a user and the filter and any micro-organisms contained therein. Moreover, the casing can be equipped with simple connection means, such as a snap-fit connection.

The apparatus may comprise lime inactivating means located upstream of the radiation assembly.

The apparatus may furthermore be provided with hydroelectric conversion means, such as a turbine, which can convert flow energy of passing water into electric energy, for charging a battery and/or for powering the radiation source and/or other electric components of the apparatus, thereby rendering the apparatus less dependent on an electricity grid, which for safety reasons may not always be available in wet environments.

In a highly advantageous embodiment the apparatus is equipped with control means for controlling the power supply to the radiation assembly and/or for keeping count of the lifetime of the radiation source and/or filter and/or for detecting malfunction of the apparatus.

. With such control means the safety of the apparatus can even further be improved as these means can signal a user when components need to be replaced, for example due to malfunction or upon reaching a predetermined maximum number of operating hours. Besides alarming the user, for instance by acoustic and/or visual means, the control means may also automatically shut down the apparatus, by means of a controllable valve, to prevent distribution of possibly contaminated water.

The control means for controlling the power supply to the radiation assembly may comprise a sensor, e.g. a movement sensor, which automatically switches on the radiation source when a user approaches the supply opening. In this way it is ensured that the radiation source is turned on before the user starts tapping water from the supply opening. Such configuration furthermore allows the radiation source to be switched off when the apparatus is not in use. This saves energy and helps to prolong the lifetime of the radiation source. It furthermore helps to reduce the amount of heat generated by the radiation source, which in turn causes less water to evaporate and less lime to deposit on the radiation source. To prevent micro-organisms from developing around the supply opening, when the apparatus is not used for a relatively long time, the control means may be arranged to activate the radiation source at regular intervals, for instance once a day, during a predetermined amount of time.

The invention furthermore relates to a water supply system comprising at least one supply opening and an apparatus for clearing water as above described for performing the method according to the invention before water is being discharged from said supply opening, wherein the water supply system is:
- a sanitary equipment such as a water tap, a shower, a (whirlpool) jet;
- a medical equipment such as a dentist tool provided with cooling and/or rinsing facilities, eye shower;
- another water distributing equipment like a drink water refill unit, a (drinking water) fountain, an irrigation system, a sprinkler system or the like; or
- a water conditioning unit, for conditioning the water in for example an aquarium, a (swimming) pool, a humidifier, a vase, or the like.

The invention also relates to a shower unit comprising the apparatus for clearing water according to the invention, wherein the outlet opening (15, 115, 315) of the apparatus is configured as, or provided with a shower head.

The shower unit and at least the radiation assembly may be connected to the remainer of the apparatus via a flexible hose, connecting the shower head to a water supply provision. The shower unit may be designed as a built-in unit, enclosed in a watertight housing.

The invention furthermore relates to a vase comprising an inlet opening, an outlet opening, pumping means for pumping water around, between said inlet and outlet opening, along a radiation assembly and/or a filtering assembly so as to clear water that in use is contained in the vase from micro-organisms. The vase may be provided with a radiation assembly and/or a filter assembly for clearing water, which in use is contained in the vase, from micro-organisms. Thanks to such configuration the lifetime and/or quality of flowers arranged in said vase may be enhanced considerably, making the vase very interesting for both consumers as flower merchants. The vase may comprise a temperature controlling means to control the water temperature.

The radiation assembly, the filtering assembly and/or temperature controlling means may be housed in a base, provided with an interface for detachable connection to the vase, so that one base can be combined with several vases.

The vase may be provide with control means provided, with one or more flower specific controlling algorithms, for optimising one or more properties of the specific flower, when arranged in the vase, for instance its lifetime.

The vase may be provided with lifting means, for lifting stems of flowers, which in use are arranged, in the vase from the bottom of the vase.

The lifting means may be arranged for clamping or otherwise fixating stems of flowers, wherein the lifting means are manufactured from or coated with antibacterial material.

Further advantageous embodiments of a method, an apparatus, a water supply system, a shower unit and a vase according to the present invention are set forth in the dependent claims.

To explain the invention, exemplary embodiments thereof will hereinafter be described with reference to the accompanying drawings, wherein:
Figs. 1A,B show in perspective view, respectively in longitudinal cross section, a first embodiment of a shower unit according to the invention, provided with a radiation assembly and a filter assembly;
Fig. 1C shows in more detail the radiation assembly of the shower unit of Fig. 1B;
Fig. 1D shows in more detail the connection of the filter assembly in the shower unit of Fig. 1B;
Figs. 2A,B show an alternative embodiment of a shower unit according to the invention, provided with a flexible hose, wherein the shower head is connected to a flexible hose;
Figs. 3A-3F show several examples of water supply systems provided with an apparatus according to the invention for clearing water from micro-organisms before being discharged from said supply system; and
Figs. 4A,B show an alternative embodiment of a shower unit according to the invention, enclosed in a concealing box, with and without covering front panel.

In this description, the term UV-C radiation or light will be used for ultraviolet radiation having a wavelength ranging from about 100 nm (nanometres) to about 280 nm. The term micro-organisms is at least understood to include amoebas and bacteria, including but not limited to Legionella, E.coli, Salmonella, Giardia, Cryptosporidium, Shigella, dysenteria and Vibrio.

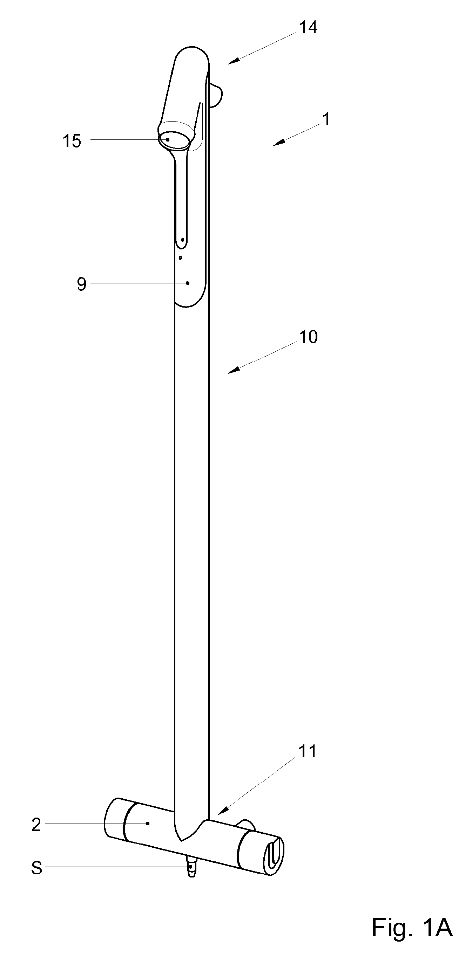

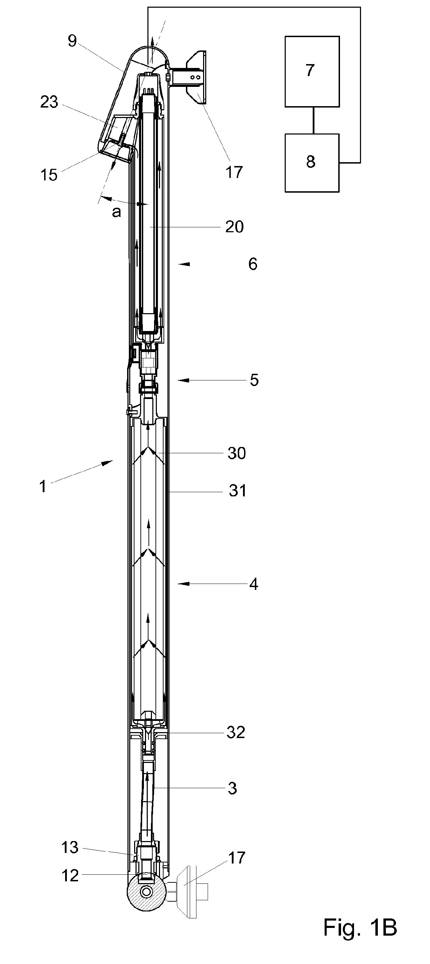

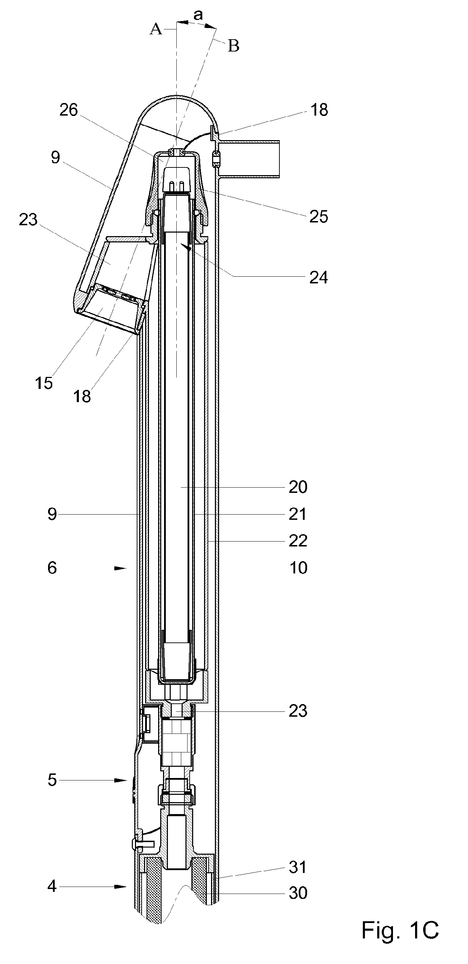

Figs. 1A-D show a first embodiment of a shower unit 1 according to the invention, comprising a substantially tubular shower housing 10, which may be made of metal or plastic and is designed to enclose the various components of the shower unit 1, allowing easy installation thereof. The housing 10 is provided with mounting brackets 17, for fixture to a wall, and comprises furthermore near a first end 11 an inlet opening 12 and fastening means 13 (see Fig. 1B) for connection to a water supply system, such as a thermostatic mixer tap 2, as shown. Near its other end 14, the shower housing 10 is provided with a water outlet opening 15, which in the given embodiment forms part of a showerhead. Inside the housing 10, a slightly bend tubular connecting piece 3, a filter assembly 4, lime inactivating means 5 and a radiation assembly 6 form a water passage 16 (as indicated by the arrows in Fig. 1B), connecting the water inlet opening 12 to the water outlet opening 15. The shower unit 1 further comprises a power supply 7, which may for instance comprise a battery, a connection to an electricity grid, possibly via a transformer, or a turbine for converting flow energy of the water into electric energy. The shower unit 1 may further comprise control means 8, for instance a UV-sensor, to monitor, and if necessary control the radiation intensity of the radiation assembly 6, a sensor to keep count of the lifetime of the various components or sensors to detect malfunction of the various components of the system, in which case the user may be alarmed and/or the unit 1 may be shut down, etc.. For the latter purpose, the unit 1 may be provided with a controllable valve (not shown), to prevent water from being discharged. The valve may be mounted at any suitable location in the water passage 16. As best seen in Figs. 1A and 1C an upper portion of the shower housing 10 including the outlet opening 15, is covered by a removable plate 9, which may be attached to the housing 10 by means of for instance snap fingers 18 (as seen in Fig. 1C) and provides access to the housing 10, for instance to inspect or replace the various components housed therein. Said cover plate 9 may for instance be made of plastic or metal, and may be printed or moulded with product information or information regarding the manufacturer. The shower housing 10 may further comprise one or more taps, for draining water collected in the housing 10, caused by for example condensation or leakage.

The radiation assembly 6, which is shown in more detail in Figs. 1C, comprises a radiation source, in particular a UV-C lamp 20, for instance a four-pin single-ended, low-pressure mercury vapour lamp, with a radiation peak at 253.7 nm (nanometres) marketed by Philips. The lamp 20 is surrounded by a substantially tubular reaction chamber 22, having a slightly tapered bottom end with a first central opening 23, connecting to the water passage 16, and a substantially flat top end with a second central opening 24, for insertion of the lamp 20. The tapered design of the bottom end ensures that water, during use, can smoothly enter the chamber 22 and, after use, can automatically drain away so that no water will remain in the chamber 22 after use. The opening 24 at the top end is closed off by a cap 25, which includes a connector 26 for connecting the lamp 20 to the power supply 7. The reaction chamber 22 is furthermore near its top end provided with a tubular branching off 27, which extends under an angle α with regard to the main central axis A of the reaction chamber 22 and comprises an open end for receiving the showerhead 15. Said angle α is chosen such, that the showerhead 15 and any water passing there through, can be fully radiated by the lamp 20, without putting a user of the shower at risk of directly eyeing the radiation source, which could be potentially harmful. In the embodiment shown in Figs. 1B,C, the angle α is about 20°, but it will be clear that other values are possible to satisfy abovementioned conditions. The shower head 15 may even be pivotally mounted in the chamber 22, so as to allow a user to adjust the angle α. Important though is that the overall design of the chamber 22 is such that all parts of the chamber 22 that during use come in contact with water are radiated by the lamp 20, either directly or via reflection of radiation by the housing walls.

In a preferred embodiment, as illustrated in Figs. 1B and 1C the UV-C lamp 20 may be enclosed in a transparent tube 21, for example made of quartz. Such tube 21 protects the lamp 20 against direct contact with the water and as such prevents the lamp 20 from direct exposure to contamination and temperature fluctuations, which could restrict the lifetime and/or intensity of the lamp 20. The reaction chamber 22 is preferably made of metal, in particular stainless steel, and preferably provided with polished inner walls, for instance by electrolytic polishing techniques. These polished walls can reflect the radiation and consequently increase the efficiency of the lamp 20. Moreover, the polishing helps to delay contamination, as particles will not readily adhere to the smooth walls.

The filter assembly 4 comprises a filter 30, enclosed in a casing 31. Preferably the filter 30 is an antibacterial filter made of an antibacterial material or treated with an antibacterial compound, such as MicroFree® antibacterial material made by DuPont. Such material may slow down growth of fungi, mildew and other micro-organisms retained in the filter and as such prevent these organisms from breaking through. For most effective use of the available filtering surface, the filter 30 is preferably designed to have the water pass from the outside to the inside as indicated by the arrows in Fig. 1B. Furthermore, the filter 30 is preferably made from multiple fibre layers with different pore sizes, i.e. for instance a fine inner layer and a coarser outer layer. This helps to increase the filter's contaminants catching capacity and lifetime. The exact pore size may on the one hand be selected on the basis of the average size of the micro-organisms to be retained and should on the other hand be sufficiently large to enable a certain flow rate of the water. Additionally, the size of the pores may be adjusted to the specifications of the radiation assembly 6, so as to ensure that the micro-organisms that pass the filter assembly 4 during use, are smaller than the maximum size that can be exterminated with the available radiation source. Typically, pore sizes may range from about 1 micron up to about 5 micron. However, these values should not be construed as limiting.

The filter 30 is preferably enclosed in a casing 31 which may render replacement of the filter 30 more easy and safe, as the casing 31 can protect a user against direct exposure to the filter 30 and the micro-organisms collected therein. Additionally, the casing 31 can be readily provided with coupling means for connecting the casing 31 to the tubular connecting piece 3 and the lime inactivating means 5 respectively.

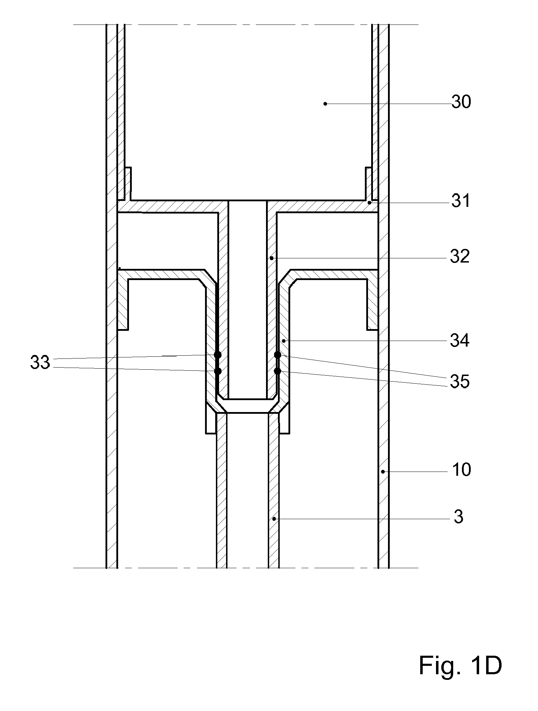

Such coupling means may for instance be configured as illustrated in Fig. 1D, showing a bottom end of the casing 31 with a tubular end piece 32, surrounded by two resilient O-rings 33, and the top end of the connecting pipe 3, with a ring-shaped coupling piece 34. This coupling piece 34 has an inner diameter, which is slightly larger than the outer dimension of the end piece 32, but slightly smaller than the outer dimension of the O-rings 33, at least in undeformed state. Hence, when axially inserting the tubular end piece 32 in the ring shaped coupling piece 34 in order to establish a connection, the O-rings 33 will be slightly compressed, thereby exerting a radial clamping force, fixating the end piece 32 in the coupling piece 34, and at the same time sealing the connection in radial direction. To guide and centre the tubular end piece 32 during its insertion in the coupling piece 34, both pieces may be provided with a bevelled edge, as illustrated. The described connection offers the advantage that it can be simply established through axial movement, requiring little space. Of course, many other connections are possible within the scope of the invention, for instance a threaded connection.

The lime inactivating means 5 are meant to prevent lime and other minerals, which are solved in the water and which are too small to be retained by the filter, from depositing on the inner walls of the reaction chamber 22 and the outer walls of the radiation source 20, which would seriously compromise the lifetime and efficiency of the radiation assembly 6. To that end the lime inactivating means 5 are provided with means, for example a magnet, that can ionise said particles, i.e. provide them with a positive charge. By doing so, the particles will repel each other and consequently remain suspended in the water instead of depositing on said walls of the reaction chamber 22 and/or quartz tube 21. Of course, other means could be used to ionise the particles and/or prevent them from depositing on the radiation assembly 6. For instance, the radiation source, in particularly the quartz tube or in the absence thereof, the lamp itself, could be covered with a lime repellent coating.

The shower unit 1 of Fig. 1A-D functions as follows. At opening of the mixture tap 2, water will flow from the supply system to the filter assembly 4 via the connecting pipe 3. The filter 30 will retain a substantial part of the micro-organisms, for instance 99 % of all micro-organisms with a size larger than 1 micron. The filtered water is then passed along the ionisation means, to ionise any lime particles and/or other minerals contained therein, so as to prevent them from forming deposits during the subsequent radiation step. During this radiation step, most of the micro-organism still remaining in the water, at least the health threatening ones, will be inactivated. As these micro organisms will be small in size and number, inactivation can be achieved, with a radiation source 20 of relative low intensity.

Tests carried out by the KIWA (a Dutch research and knowledge institute for water and associated ecological and environmental questions) have shown that with a shower unit 1 according to the invention, equipped with a 16 Watt Philips single end UV-C lamp and the MicroFree® filter as described above, the Legionella concentration of water having an average Legionella concentration of 4.25 x 10⁶ kve/l (wherein kve stands for 'colony forming unit') could be reduced by more than 5.1 log-units, when said water was passed through the shower unit 1 with a flow rate of 6 l/min (litres per minute), respectively 8 l/min. That is, the said concentration could be reduced to less than 50 kve/l, which is actually the lowest concentration value measurable with the present state of the art measurement equipment.

Hence, thanks to the addition of a filter assembly 4 according to the invention water can be effectively cleared from micro-organisms, and distributed safely, with a radiation assembly 6 of relatively low, and therefore acceptable intensity. Thanks to the fact that said radiation takes place up to and in the outlet opening 15, micro-organisms cannot grow around said outlet opening 15, and water leaving said opening will be free from micro-organisms. Preferably, the radiation source 20 is switched on permanently, so as to effectively prevent growth of micro-organisms around the outlet opening 15, even when no water is distributed. Alternatively, the shower unit 1 may be provided with a sensor (not shown) which automatically switches on the radiation source upon detection of the water supply being opened or upon detection of a user approaching the shower unit 1, and remains switched on for a predetermined amount of time, for instance five minutes, after the water supply has been closed and the water has left the housing 10, e.g. via a drainage provision. Alternatively or additionally the shower unit 1 may be provided with a second, additional radiation source (not shown), especially designed to prevent micro-organisms from growing in the outlet opening. As such, this second source may be of small dimensions and intensity, requiring little energy for its operation.

Additionally, the safety of the unit 1 may be further enhanced by the control means 8, signalling a user when the filter assembly 4 and/or radiation assembly 6 need replacement, for instance because they do not function properly or have reached their maximum number of operation hours. Suitable signalling means may include visual indicators such as a LED and/or acoustic indicators such as an alarm sound. Replacement of the filter 30 is made safer thanks to the casing 31, as described above.

In a further preferred embodiment the shower unit 1 may be integrated with a thermostatic mixer tap 2. Such tap allows the maximum water temperature to be limited, for instance to 40°C, thereby ensuring the safety of the user and preventing a drop in the radiation intensity and/or filter efficiency, which may occur at higher temperatures.

Alternatively, the shower unit 1 may be completely concealed in or behind a wall except for the shower head 15. Such shower configuration may be advantageous in public shower places, which are susceptible to vandalism, such as swimming pools, sports facilities and the like. The remaining configuration of the shower unit 1 may be similar to the one described above. One or more cover plates may be provided, to give authorised persons access for replacement of components when needed.

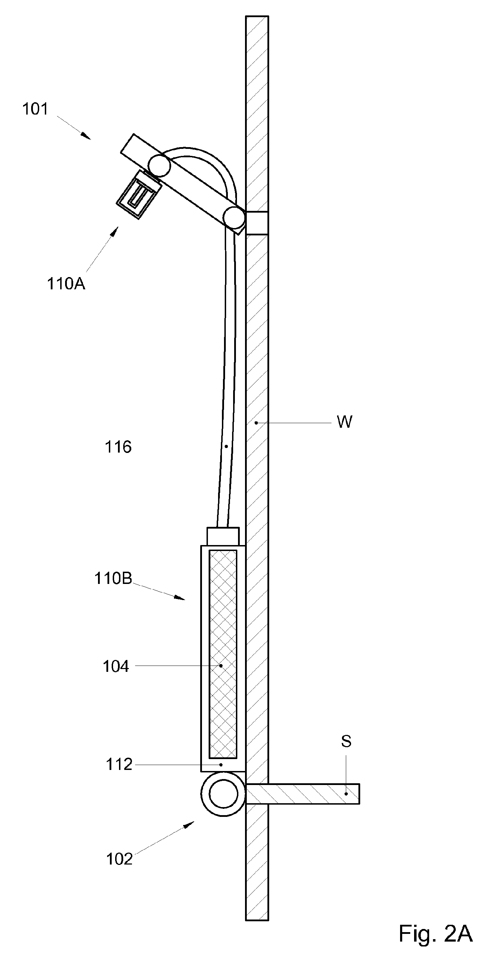

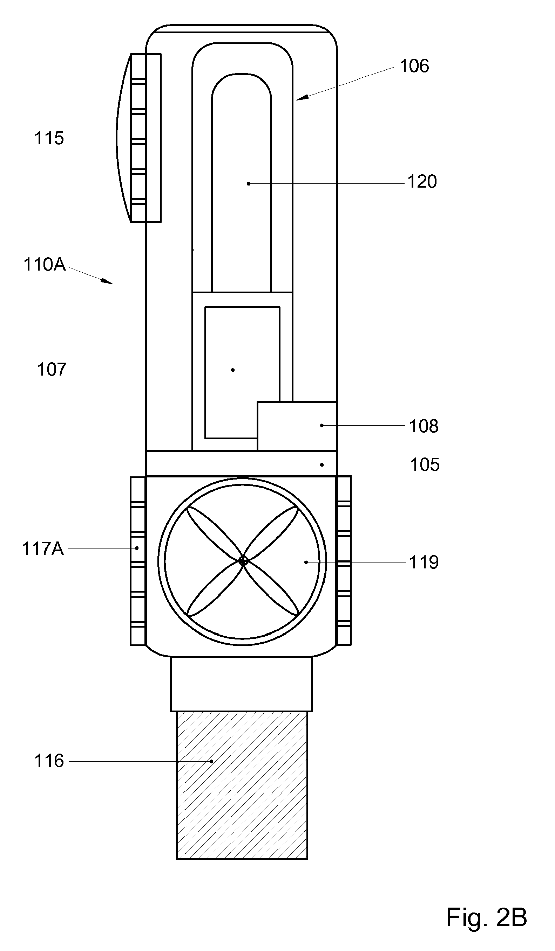

Figs. 2A,B show an alternative embodiment of a shower unit 101 according to the invention. Parts similar or corresponding to the parts shown in Figs. 1A-D are indicated by the same reference numerals, augmented by 100. The main difference with the shower unit 1 of Figs. 1A-D is that the shower housing 110 is divided into two separate parts 110A,B, that is a first housing part 110A (see also Fig. 2B) comprising a shower head 115, a radiation assembly 106 and power supply means 107, and a second housing part 110B comprising a filter assembly 104. Said second housing part 110B is stationary mounted to a wall W, and connected to a mixer tap 102. The first housing part 110A is connected to the second housing part 110B by means of a flexible hose 116 and can therefore be freely manoeuvred by a user or suspended from a fixture on the wall W, with brackets 117A. The filter assembly 104 in this embodiment preferably comprises an antibacterial filter 130 with a relative fine pore size, capable of retaining a high percentage of micro-organisms, for instance 99% of all micro-organisms having a size larger than about 1 micron. The filter assembly 104 may furthermore comprise the same or similar components as the filter assembly 4 of Figs. 1A-D which may be operated or replaced in a similar way.

Thanks to the high filter capacity of filter 130, the radiation source 120 for radiating the shower head 115 may be rather 'weak' and can for instance be configured as a UV-C light of relative small dimensions and low intensity which can easily fit in the first housing part 110A. In an alternative embodiment (not shown), the radiation assembly may comprise a radiation source and a light conductor, wherein the radiation source can be mounted in the second housing part 110B and the light conductor, e.g. one or more optical fibres, extend from said radiation source through hose 116 into the first housing part 110A, so as to radiate the shower head 115. The light conductor can be configured such, that water is not only radiated in the first housing part 110A, but also in the hose 116. Thus, water can be radiated over a relatively long section, allowing for an even lower radiation intensity.

The radiation source 120 is preferably only switched on after a shower session, so as to kill any micro-organisms that may have gathered around the shower head 115, without unnecessarily putting a user at risk by exposing him to potentially harmful radiation. Optionally, the unit 101 can be provided with a sensor as described above, which automatically switches on the radiation source 120 when the water supply is opened or when a user approaches the shower, and automatically switches off the radiation source 120 some predetermined time after the water supply has been cut off. The unit 1 may furthermore be provided with any of the other provisions and safety features as described for the unit 1 of Figs. 1A-D, such as for example control means 108 for monitoring malfunction and/or lifetime of the various components and/or lime inactivating means 105 for preventing lime particles from contaminating the radiation source.

The power supply means 107 are preferably designed to be independent from an external power supply, so that the shower unit 101 can be freely installed at every location. To that end the power supply means 107 may for instance comprise a battery, preferably rechargeable, more preferably combined with a hydro-electric conversion means 119, such as a turbine as shown in Fig. 2B, arranged to convert flow energy of passing water into electric energy for charging the battery. Consequently, during a shower session, the battery can be charged for enabling the radiation source 120 to be powered after the shower session during a sufficient period, say several minutes, to inactivate any micro-organism.

Hence, thanks to the flexible hose 116, the powerful filter 130, the relative small radiation source 120 and optionally the optical conductor and the independent power supply means 107, the shower unit 101 according to Figs. 2A,B combines the installation freedom and good manoeuvrability of the known 'standard' shower units with the enhanced safety features of the invention.

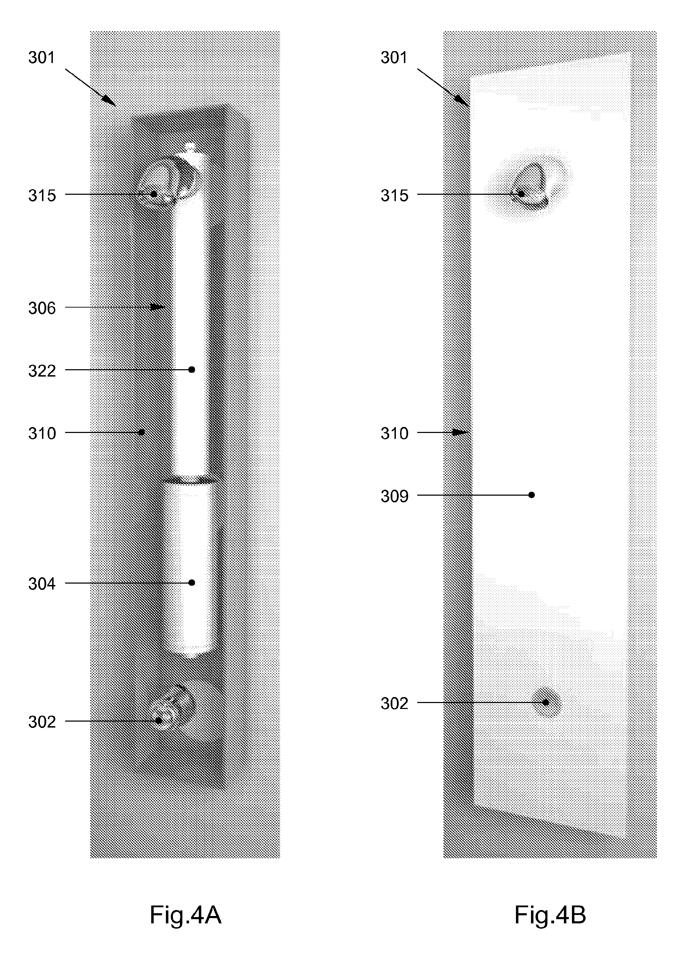

Figs. 4A and B show yet another embodiment of a shower unit 301 according to the invention, wherein similar or corresponding parts are indicated by similar reference numerals, augmented by 300. This shower unit 301 differs from the aforementioned embodiments in that the unit 301, with the exception of the shower head 315, is enclosed within a concealing box 310. The shower unit 301 furthermore differs from the previous embodiments in that the shower head 315 is designed as a separate, modular component, which can be interconnected to the reaction chamber 322 via suitable coupling means (not shown). Thanks to such configuration, the shower head 315 can be readily replaced. This allows the shower unit 301 to be used with shower heads of different designs and dimensions. All designs are such that the outlet openings of these heads 315 are irradiated by the radiation assembly 306. Instead of a shower head, it is also possible to connect a hose 316 to the coupling means, which hose 316 at its other end may be provided with a shower head. In such case, the shower head may be provided with a separate radiation source (comparable to the radiation source 106 shown in Fig. 2B). Alternatively, the hose 316 may be provided with an optical conductor, arranged to radiate the shower head and possibly the hose 316 with radiation received from a radiation source 320 (not visible) included in the reaction chamber 322).

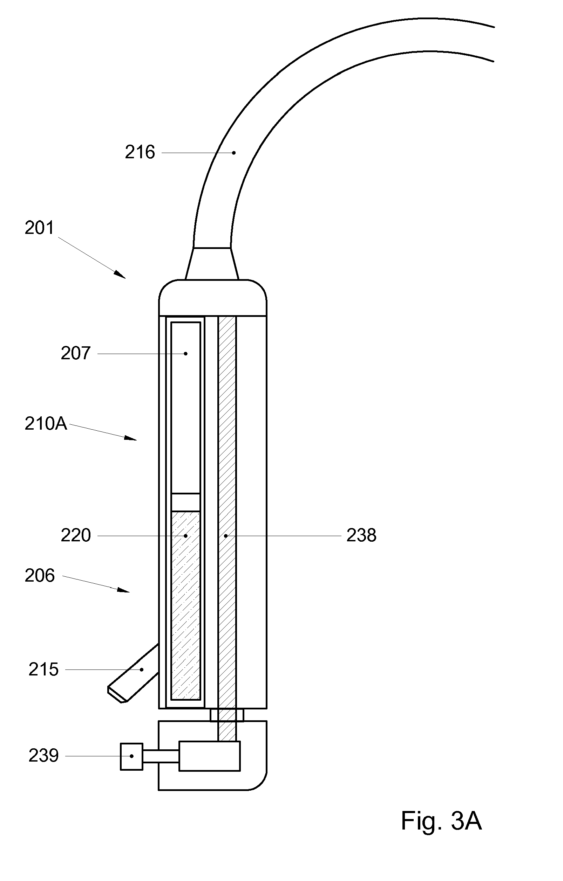

Fig. 3A shows a medical equipment, more specifically a dental drill, equipped with a cooling and/or rinsing provision, having essentially the same, be it miniaturised configuration as the shower unit 101 of Figs. 2A,B. Similar parts are indicated with similar reference numerals, augmented with 200. As shown, the dental equipment comprises a first housing part 210A, provided with an outlet opening 215 which ends near a head 239 of the drill 238, so that during drilling operation, water may be dispensed near the drilling location, so as to serve as cooling and/or rinsing water. The first housing part 210A furthermore comprises a radiation assembly 206 with a radiation source 220, arranged to radiate said outlet opening 215, and a power supply 207 for powering the radiation source 220. The power supply 207 may for instance comprise a battery or alternatively may be powered by the same power supply as the drill. The first housing part 210A is connected to a water passage 216, which may be provided with a filter assembly 204 (not shown) located more upstream of the first housing part 210A. With this configuration water can be filtered and radiated as it leaves the outlet opening 215, thereby inactivating micro-organisms contained therein and making the use of chemical disinfecting means unnecessary, which is better for the patient. Moreover, by radiating the outlet opening 215, contamination can be prevented in both directions, that is from the supply system to the patient, as well as from the patient to the supply system.

It is noted that in this particular application, it may be possible to leave out the filter assembly 204, as the water volumes and flow rates are small, resulting in longer exposure times and higher radiation doses. Consequently, the radiation source 220 alone may be sufficiently effective to inactivate the micro-organisms.

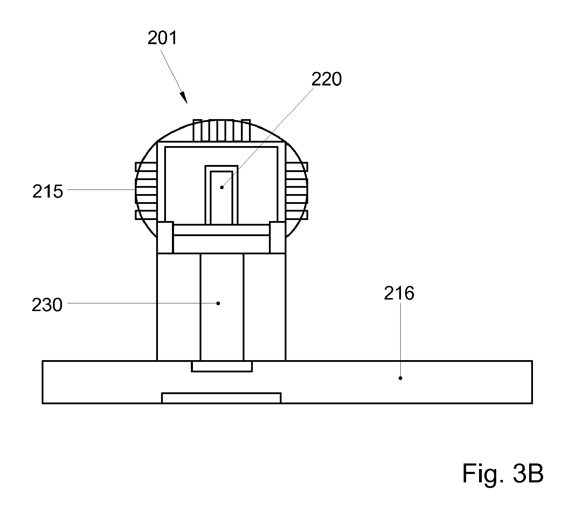

Fig. 3B shows a further possible application of an apparatus according to the invention in a water supply system, in particular a distribution system, more particular a sprinkler system. Such a system may for instance be used in an office, as safety precaution in case of fire, or in green houses to water plants. The system comprise several sprinklers 215, each connected to a common water supply conduct 216 and each provided with a radiation source 220 and a filter 230 for filtering and subsequently radiating water before it leaves the sprinklers 215. In a preferred embodiment, the sprinklers 215 all share one filter 230, which can be installed in the common water supply conduct 216. Furthermore, each sprinkler 215, may be radiated by an optical conductor, connected to one common radiation source 220. It will be clear that such configuration, i.e. with shared filter and radiation source, will in general be beneficial for applications having a plurality of outlet openings 215. The working principle of the sprinkler system is comparable to that of the distributing apparatuses described before.

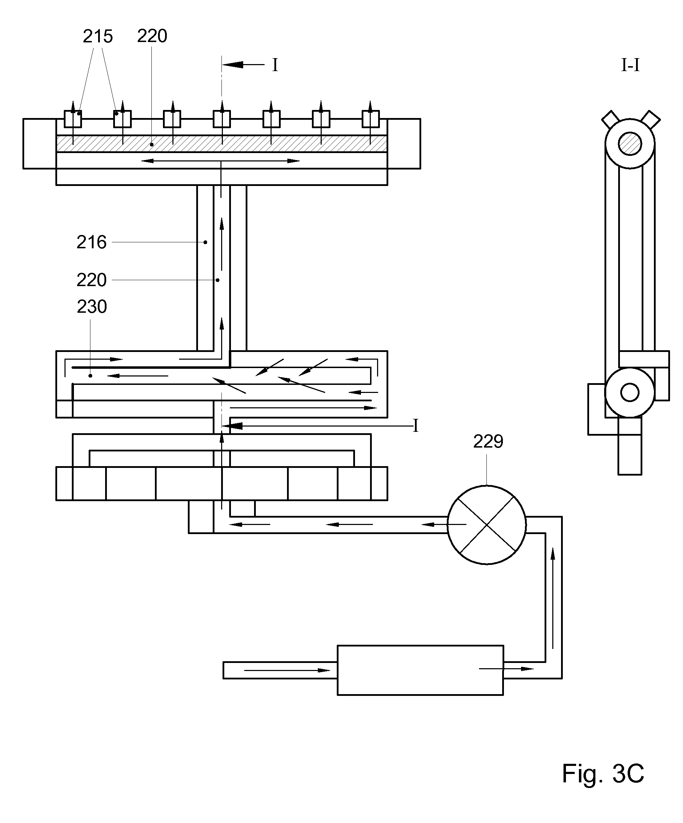

Fig. 3C presents an irrigator. Such irrigators are arranged to irrigate land with surface water, collected in ditches and the like. Such water is usually quite contaminated, and may in particular contain high concentrations of Legionella. When such contaminated water is irrigated, part of this Legionella containing water may vapour, especially on sunny days, which may pose a serious health threat to anybody in the neighbourhood of such irrigator, as they may inhale said Legionella containing vapours. Moreover, the plants which are irrigated by said water will be contaminated as well. By providing the irrigator with an apparatus according to the invention, these problems may be solved. To that end a water distribution channel 216 of the irrigator is provided with an antibacterial filter 230, which may be preceded by a first filter for retaining coarser contamination. The distribution channel 216 furthermore comprises a radiation assembly 206, which in the illustrated embodiment comprises two UV-C lights, one extending in the channel 216, in the flow direction of the water, and one extending along the spray nozzles 215, thereby covering a relatively long section of the water passage 216 and prolonging the exposure time and effectiveness of the radiation step.

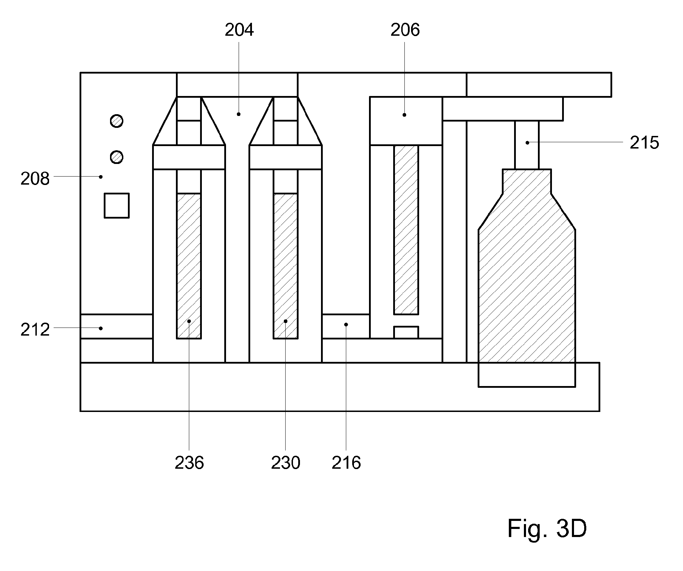

Fig. 3D shows an apparatus for filling or refilling bottles or the like containers with drinking-water. The apparatus comprises a filter assembly 204, comprising an antibacterial filter 230 and an active carbon filter 236, and a radiation assembly 206, located downstream of the filter assembly 204 and arranged to radiate the refill opening 215. Furthermore, control means 208 are provided, with which for instance the flow rate may be controlled, the radiation intensity and/or the temperature of the water, and which control means 208 may furthermore draw a user's attention to malfunction of the apparatus or necessary replacements, or the like. With such apparatus plane tap water can be converted into clean healthy drinking water, making such apparatus convenient for use in caterings, shops or private homes. The radiation source helps to prevent growth of bacteria up till the refill opening and may be switched on permanently, or after each refill action. Optionally, the apparatus may comprise, in addition to the illustrated radiation assembly 206, a second small, low voltage UV-C source (not shown), located in the refill opening 115 itself, preferably near the free end thereof, so as to even better ensure that this end remains free from micro-organisms.

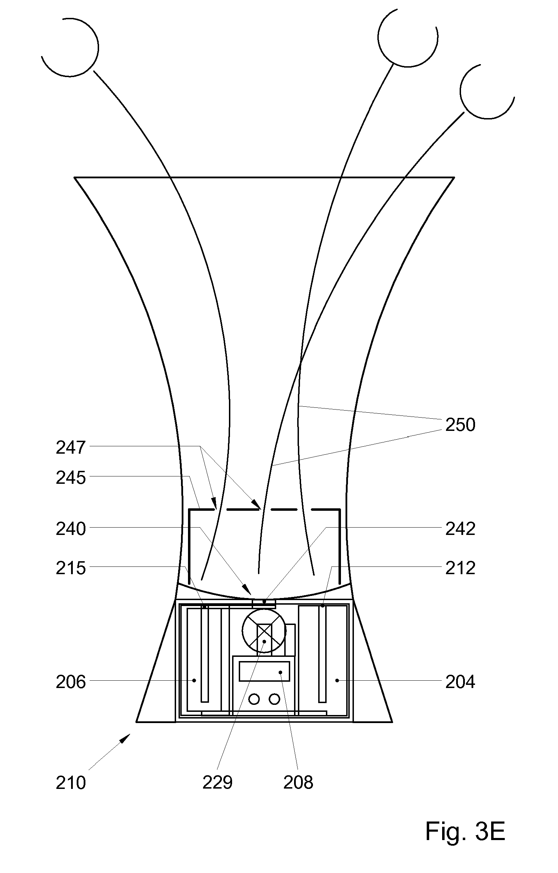

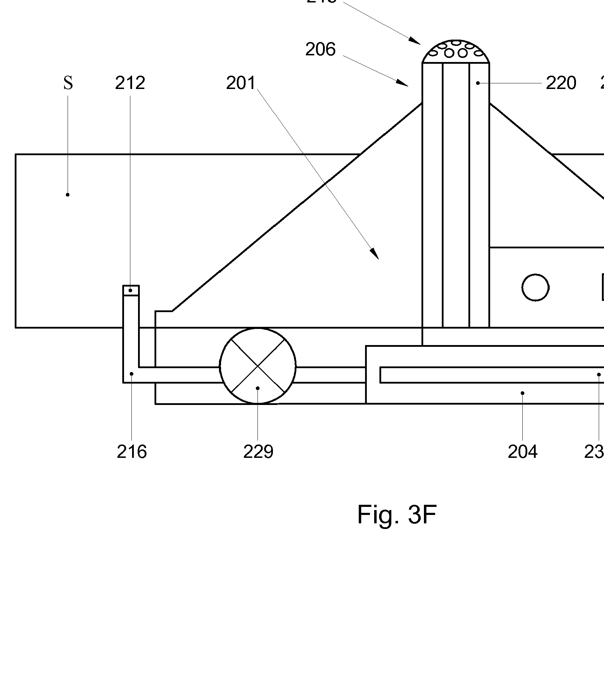

Figs. 3E and F show two applications of a method and apparatus according to the invention in another category of water supply systems, that is water supply systems used to condition and recycle water in confined spaces such as a pool, swimming pool, aquarium, vase (Fig. 3E) or fountain (Fig. 3F). These systems comprise pumping means 229 for pumping the water around from and to the confined space, via a respective inlet opening 212 and outlet opening 215. The systems furthermore comprise an antibacterial filter assembly 204 which is positioned near the inlet opening 212 and a radiation assembly 206 which is positioned near the outlet opening 215, so as to radiate water passing said opening 215, preferably permanently. Again, control means 208 may be provided, for instance to control the pump rate of the pumping means and/or monitor the lifetime or malfunction of the components, thereby enhancing the system's safety. Furthermore, anti-lime means may be provided, to prolong the lifetime of the radiation assembly 206 by preventing lime from depositing thereon. The radiation assembly 206 may be powered by a battery or be connected to the electricity grid. Thanks to the above described features, water can be cleared from undesired micro-organisms and will have to be changed less often.

In the case of the vase, the clearing of the water may help to prolong the lifetime and/or blooming quality of flowers contained therein. Additionally, the vase may be provided with means 240 for controlling the temperature of the water and/or agitating means (not shown) for moving the water around in the vase, which likewise may help to prolong the lifetime and/or quality of the flowers. The temperature controlling means 240 may for instance comprise a heat exchanger or a cooling plate 242, mounted near the bottom of the vase. In such case, it may be beneficial to provide the vase with lifting means 245, arranged to slightly raise the stems 250 off the cooling plate 242, thereby preventing direct contact therewith, which could cause freezing damage to the flowers. Such lifting means 245 may furthermore prevent the stems 250 from sucking up contaminations, bacteria and/or other waste material, which during use may have sunk to the bottom of the vase, thereby maintaining good water supply to the flowers. These lifting means 245 alone may help to enhance lifetime and/or quality of the flowers and could therefore advantageously be applied in a conventional vase, without temperature controlling means 240, radiation assembly 206 and/or filter assembly 204.

The lifting means 245 may for instance comprise some screening member, which can be mounted at some distance from the vase bottom and be provided with openings 247, arranged to receive and hold one or more stems 250. The openings 247 may for instance be slightly deformable, preferably elastically, or be provided with friction increasing means, so as to fixate the respective stems 250. In an advantageous embodiment the lifting means 245 can be manufactured from or be coated with some antibacterial material.

The control means 208 may comprise one or more user selectable programs, containing flower related data for varying and controlling for instance a radiation intensity, circulation rate or water temperature during the lifetime of the flowers, at values which have been found beneficial to influence specific properties of the flower, for instance its flowering time, the time before it sprouts (which may be interesting for flower merchants), its overall lifetime and/ or the blooming quality of the flower.

The radiating assembly 206, filtering assembly 204 and/or temperature controlling means 240 are preferably comprised in a separate base 210, which can be provided with some standardized interface so as to allow this base 210 to be combined with several vases of different shapes and dimensions. Such base 210 could furthermore comprise aforementioned control means 208 and/or a power source.

It is noted that the radiating assembly 206 in this application does not necessarily have to be positioned so as to radiate the outlet opening 215, but can be positioned at some distance there from. Preferably, the radiating assembly 206 is positioned so as to radiate a bottom of the vase, in order to deactivate or kill any bacteria which may have collected at the bottom of the vase.

It is furthermore noted that the aforementioned beneficial effects on the flowers may already be obtained by using only the filtering step or only the radiation step.

The invention is not in any way limited to the exemplary embodiments shown in the description and the figures. Many variations thereof are possible within the scope of the invention, as defined by the claims. Moreover, all combinations of parts of the various embodiments shown and described in this description are explicitly understood to be incorporated within this description and to fall within the scope of the invention as outlined by the following claims.

## Claims

1. Vase comprising an inlet opening, an outlet opening, pumping means for pumping water around, between said inlet and outlet opening, along a radiation assembly and/or a filtering assembly so as to clear water that in use is contained in the vase from micro-organisms.

2. Vase according to claim 1, wherein a temperature controlling means are provided, to control the water temperature.

3. Vase according to claim 2, wherein the temperature controlling means comprises a heat exchanger or a cooling plate.

4. Vase according to any one of claims 1-3, wherein the radiation assembly, the filtering assembly and/or temperature controlling means are housed in a base, provided with an interface for detachable connection to the vase, so that one base can be combined with several vases.

5. Vase according to anyone of claims 1-4, wherein control means are provided, provided with one or more flower specific controlling algorithms, for optimising one or more properties of the specific flower, when arranged in the vase, for instance its lifetime.

6. Vase according to claim 5, wherein the control means comprise one or more user selectable programs, containing flower related data for varying and controlling for instance a radiation intensity, circulation rate or water temperature during the lifetime of the flowers, at values which have been found beneficial to influence specific properties of the flower, for instance its flowering time, the time before it sprouts, its overall lifetime and/ or the blooming quality of the flower.

7. Vase according to any one of claims 4-6, wherein the control means is provided in the base.

8. Vase according to anyone of claims 1-7, wherein the vase is provided with lifting means, for lifting stems of flowers, which in use are arranged, in the vase from the bottom of the vase.

9. Vase according to claim 8, wherein the lifting means are provided with openings, for clamping or otherwise fixating stems of flowers, wherein the lifting means are manufactured from or coated with antibacterial material.

10. Vase according to claim 9, wherein the openings are slightly deformable, preferably elastically, or provided with friction increasing means, so as to fixate the respective stems.

11. Vase according to any one of the preceding claims, wherein the radiation assembly is positioned so as to radiate a bottom of the vase.

12. Method for clearing water in a vase, according to any one of the preceding claims, from micro-organisms, such as Legionella, comprising the steps of filtering the water and subsequently radiating the filtered water to inactivate micro-organisms that may still remain therein, said radiating step acting on the outlet opening or the bottom of the vase.
